**Europäisches Patentamt**

**European Patent Office**

**Office européen des brevets**

(19)

(11) Publication number: **0 116 263**
**A2**

(12) # EUROPEAN PATENT APPLICATION

(21) Application number: **83830270.1**

(22) Date of filing: **19.12.83**

(51) Int. Cl.³: **G 11 B 15/44**

(30) Priority: **20.12.82 IT 4969582**

(43) Date of publication of application:
**22.08.84 Bulletin 84/34**

(84) Designated Contracting States:
**AT BE CH DE FR GB IT LI LU NL SE**

(71) Applicant: **AUTOVOX S.p.A.**
**981, via Salaria**
**I-00199 Roma(IT)**

(72) Inventor: **Pera, Vittorio**
**Via Bellegra, 35**
**I-00171 Roma(IT)**

(74) Representative: **Cavattoni, Massimo**
**STUDIO TECNICO BREVETTI MASSIMO CAVATTONI Via**
**Archimede, 144**
**I-00197 Roma(IT)**

(54) **A tape transport device for moving the magnetic tape in both the directions of motion, particularly for microcassette decks.**

(57) A tape transport device for moving the magnetic tape in both the directions of motion, particularly for micro-cassette decks, in which a tilting unit (62, 62') carries one of two gear wheels (74, 74'), meshing with a pinion (58) integral with the capstan (24) and the flywheel (56), to mesh also with the main wheel (118, 118') of the related friction unit, according to the rotational direction of the capstan, in order to carry out the winding of the tape, dragged by the capstan at the normal speed, onto the take-up reel.

The tilting unit can comprise two plates (62, 62') separately movable in order to carry the related gear wheel (74, 74') to mesh, besides with the main wheel (118, 118'), also with an internal gear (60) provided at the flywheel (56), in order to carry out a fast search of tape passeges.

In order to carry out fast searches in the two directions without reversing the rotation direction of the motor, a satellite gear (94, 94') can be placed between the internal gear (60) and the gear wheel (74, 74') only in one of the two rotation directions of the flywheel (56).

Fig.3

## A tape transport device for moving the magnetic tape in both the directions of motion, particularly for micro-cassette decks

The present invention refers to a tape transport device for moving the magnetic tape in both the directions of motion, i. e. for the normal speed dragging movement, and possibly the fast forward transfer and the fast rewinding operation, of the magnetic tape in both the directions of motion, particularly for the magnetic tape decks or recorders designed to operate the so called "microcassettes".

Tape recorders are known as "reverse" or "autoreverse" type, which can run and play a magnetic tape in both the directions of motion, and some of them also reverse the direction of motion when the tape ends.

In recent years, tape recorders of such a type have been manufactured, which can play and record the so called "musicassettes" or standard cassettes of magnetic tape.

Cassettes are now being marketed, which have sizes much smaller than those of the standard cassettes: they have become known as "microcassettes".

Whereas the musicassettes have sizes in the order of ten centimeters (according to the standard DIN 45516), the microcassettes have sizes in the order of few centimeters only, and thus they enclose a much fewer length of tape.

Therefore, whereas the standard transport speed is 4,76 cm/s for the standard cassettes, in the case of the microcassettes, a standard trasport speed of 2,38 cm/s is being generally used, in order to achieve anyway quite a long duration of the tape play time.

The tape decks or recorders of the "reverse" or "autoreverse type, for standard cassettes, already known, generally make use of two flywheel-capstan-pressure roller units, each of which rotates in an opposite direction with respect to the other one and keeps unchanged its direction of rotation during the movement of the tape in both the directions.

Tape recorders of the already cited type are also known, in which the two flywheel-capstan-pressure roller units rotate in the same direction, in which case they both reverse their direction of rotation at the same time, when a reversal of the direction of tape motion takes place.

Obviously, in both cases, one of the two pressure rollers is spring urged against the related capstan, while the other pressure roller is kept away from the related capstan.

A number of drawbacks have been experienced in carrying out a device of this type for a microcassette recorder, due to the reduced geometrical sizes of the microcassette and the reduced transport speed of the tape.

The main disadvantage consists in the fact that, the distance between the two holes for receiving the capstans being reduced with respect to that of a standard cassette, also the maximum diameter of the two flywheels has to be consequently reduced. This implies a great decrease of the moment of inertia of the flywheels themselves, which, as it is known, is proportional to the fourth power of the diameter of the flywheel.

The re-establishment of a suitable moment of inertia would involve a significant increase in the height of the flywheels, and this would cause an increase in the overall dimentions of the tape recorder.

A further disadvantage is due to the fact that it is impossible to reduce the diameter of the capstans under a minimum size, without a serious detriment in the smoothness of the tape feed movement and therefore in the recording and reading quality.

Furthermore, if small size continuous current motors, usually available on the market, are to be used, which cannot be driven under a given rotational speed without detriment in the evenness of the speed itself, as a consequence of this, the diameter of the driving pulley, from which the motion is transferred to the flywheel through a drive belt, must be substantially reduced with respect to those used in standard cassette recorders.

Therefore, one is compelled to use drive belts of reduced cross-section in order to avoid any motor overrating, any poor friction grip ability between the drive belt and the pulley, and any reduced life time of the drive belt, due to a repeated bending stress.

Furthermore, such drive belts are very difficult to manufacture uniform in cross-section with the usual tecnologies for a cheap manufacturing of the drive belts themselves.

Obviously, the use of a device provided with two flywheels would involve, as in the case of the standard cassette, the switching of the two pressure rollers, i. e. the engagement of one of them and the disengagement of the other one, at each reversal of the motion direction of the tape.

Furthermore, it should be noted that, in the case of an autoreverse recorder for microcassettes, it is impossible to take advantage from one of the peculiarities of the autoreverse recorders for standard cassettes, that is the use of a single magnetic head which alternately reads the higher pair of the tape tracks or the lower one. In fact, although the tape enclosed in both the types of cassettes is the same, due to the much smaller sizes of the microcassette with respect to the standard cassette, autoreverse heads, that is four tracks heads, are not available on the market, which can be inserted into the proper window of a microcassette and the difficulties caused by the reduced sizes the heads are to have, do not let us foresee a cheap manufacturing of them in a near future.

Therefore, the main object of the present invention is to overcome the already cited difficulties by means of a tape transport device for moving the magnetic tape in both the directions of motion, particularly for micro-cassette decks, which makes use of kinematic means which can be cheaply manufactured, due to the reduced number and the semplicity of the component parts and due to the avoidance of an in-depth miniaturization.

A further object of the present invention is to provide such a device which further carries out the operations of fast forward transferring and fast rewinding the tape in both the directions of tape movement.

A further object of the present invention is to provide a device of the cited type, which has reduced overall dimentions, in the order of the microcassette size.

According to the present invention, a tape transport device for moving the magnetic tape in both the directions of motion, particularly for microcassette decks, is characterized in that it comprises a tilting unit, tiltable around the capstan axis and provided with two shafts, around which two gear wheels rotate, meshing with a pinion integral with the flywheel, whereby the flywheel tends to drag into rotation, in its same direction, the tilting unit until it carries one of the two gear wheels to mesh with the main wheel of the related friction unit, the arrangement being such that, upon the reversal of the direction of rotation of the flywheel, the tilting unit tilts, rotating around the capstan axis and positions itself in such a manner that the other of the two

gear wheels goes meshing with the main wheel of the related friction unit, thus causing the two tape reels to alternate in the function of take-up reel.

In case it is desired that fast searches of tape passages can be carried out, the device according to the present invention is further characterized in that the flywheel carries an internal gear located along its outer edge and the tilting unit comprises two plates, each of which carries one of the two shafts and is movable away from the capstan separately with respect to the other plate, until it disengages the gear wheel carried by it from the engagement with the pinion and moves it in a contemporaneous meshing engagement with the internal gear and the main wheel of the related friction unit, means being provided for securing that the other of the two plates has anyway already tilted around the capstan axis, so as to have disengaged the gear wheel, carried by it, from the meshing engagement with the main wheel of the related friction unit, before said contemporaneous meshing engagement has happened.

When one wishes to avoid reversing the rotational direction of the motor for fast searching tape passages in one of the two directions of motions, the device according to the present invention is characterized in that each plate further carries a satellite gear and a discriminating member, operative upon the rotation direction of the related gear wheel to limit the displacement towards the internal gear of the only gear wheel related to the friction unit of the reel having, in that direction of the tape movement, the function of take-up reel, whereby the gear wheel always meshes with the main wheel of the friction unit of the take-up reel, but does not directly mesh with the internal gear, being driven by it through its satellite gear.

Each discriminating member can comprise a tab, movable between two stops under the dragging action of the related gear wheel by means of a felt, a pin located on the frame interferring with the path of the tab during the displacement of the related plate only in one of the two directions of rotation.

In the following, the present invention will be further clarified from the description of a practical embodiment of the tape transport device for moving the magnetic tape in both the directions of motion, description made as an example and not in a limitative way, with reference to the accompanying drawings, in which:

Figure 1 is an enlarged elevational side view of a micro-cassette that can be utilized with the device according to the present invention;

Figure 2 is a schematic plan view of the present device, with the microcassette inserted;

Figure 3 is a plan view of the present device, with the microcassette removed;

Figure 4 is a sectional view taken along the line IV-IV of figure 3;

Figures 5 to 10 are schematic plan views of the gear system of the present device, shown in its various operating positions;

Figure 11 is an exploded perspective view of some elements of the present device;

Figure 12 is a sectional view taken along the line XII-XII of figure 3; and

Figure 13 is a sectional view taken along the line XIII-XIII of figure 3.

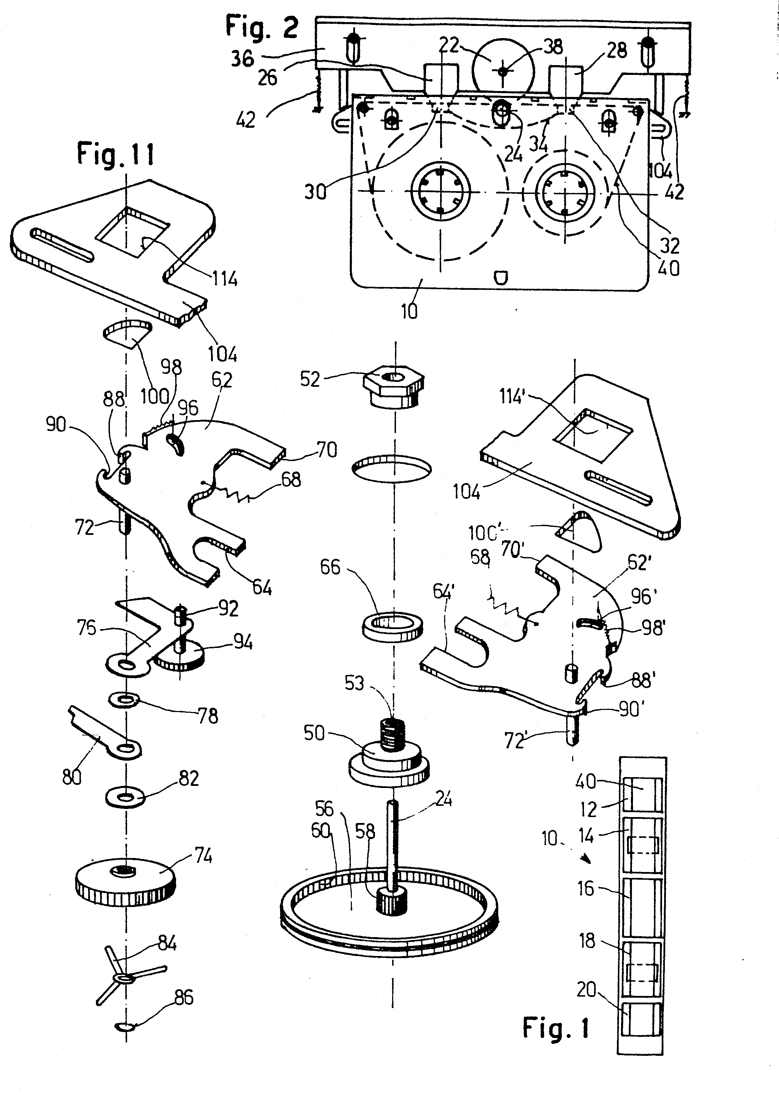

With reference to the accompanying drawings, the figures 1 and 2 show the geometrical shape of a microcassette 10, used in the recorders utilizing the device according to the present invention. As it is well shown in figure 1, the microcassette 10 has five windows 12, 14, 16, 18, 20 at one side wall of it; the central window 16 is designed to accomodate a pressure roller 22, two holes being provided on the base surfaces for the insertion of a capstan 24. The windows 14, 18 are designed to accomodate the playback/recording heads 26, 28, two tape-press felts 30, 32 being provided at these windows, fixed to a leaf spring 34. The two end windows 12, 20 may have alternative uses: first of all, such windows could be used for accomodating two pressure rollers in decks having two capstans, as at these windows there are two holes, provided on the base surface of the microcassette, for the exact centering of it; therefore the capstans would be inserted into the centering holes and it would be necessary to provide other complex systems for securing the exact centering of the microcassette. As an option, erasing heads could be accomodated in the windows 12 and 20, or they could be unused: in both these last cases, the holes for the exact centering can be exclusively used for the object for which they have been provided.

In the device according to the present invention, the heads 26, 28 are schematically shown in figure 2, as installed on a carriage 36 which also carries a spindle 38, around which the pressure roller 22 can freely rotate.

The carriage 36 can move with respect to the microcassette 10, carrying the heads 26, 28 and the pressure roller 22 away from, or towards the magnetic tape 40.

When the carriage 36 is left free, it is under the action of springs 42, which urge it towards the microcassette 10, whereby the pressure roller 22 keeps the magnetic tape 40 urged against the capstan 24, allowing the capstan 24 to drag the tape itself in the two directions of movement by friction.

In its movement away from the microcassette 10, the carriage 36 can take two positions: in a first position it is far enough that the tape can freely move between the pressure roller 22 and the capstan 24; in a second position, farther from the microcassette 10, the heads 26 and 28 and pressure roller 22 are completely out from the microcassette 10, which can be thus lifted and taken away from the recorder.

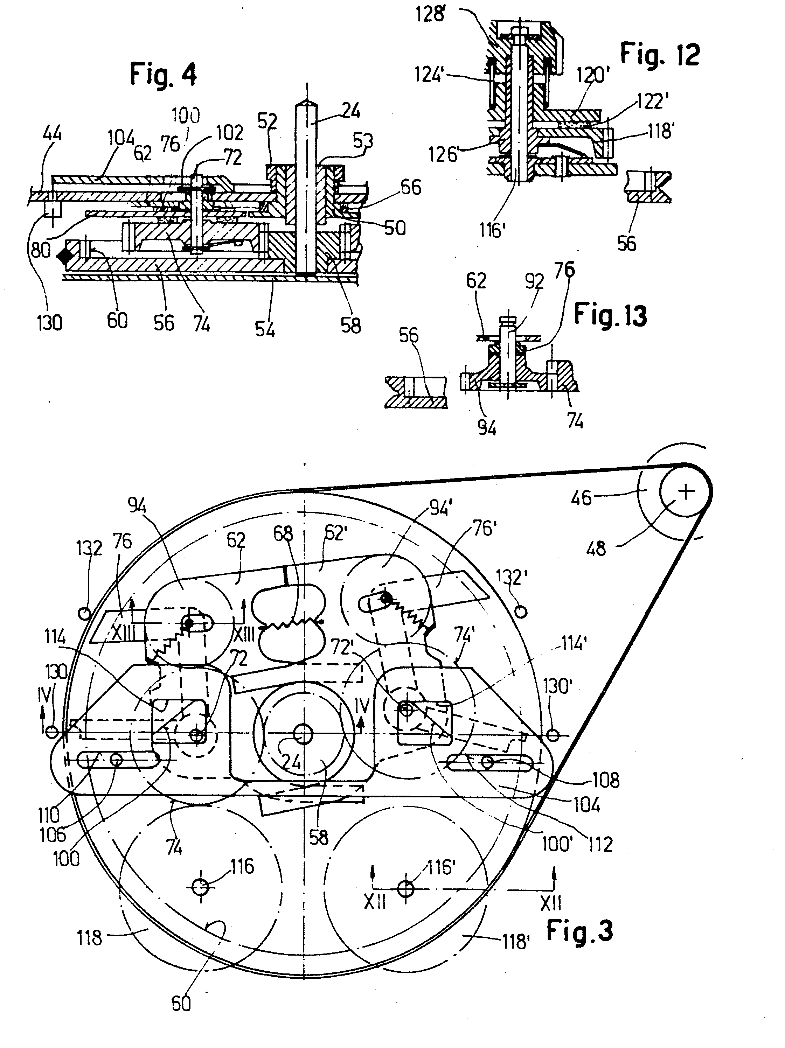

With reference now to the figures 3, 4, 11 and 12 of the accompanying drawings, one can see that the device of the present invention comprises a frame 44, to which a motor 46 is fastened, capable of rotating in both the rotation directions and provided with a pulley 48. As better shown in figure 11, a flanged bushing 50 is also fixed to the frame 44, fastened by a lock nut 52.

A self-lubricating bush 53 is fitted on the bushing 50, guiding the capstan or spindle 24, which is further supported by a bracket 54 (figure 12). A flywheel 56 is integral with the spindle 24, being fitted on it, and carries, also integral with it, a pinion 58 and an internal gear 60.

Two symmetrical plates 62 and 62', better shown in figure 11, are provided with fork-like appendices 64 and 64', respectively, which surround in the assembled position, a ring 66, idly revolving around the bushing 50. A tension spring 68 keeps the plates 62, 62' in contact with the ring 66 and leant against each other at respective edges 70, 70'. In this way, the two plates 62 and 62' and the ring 66 form, lacking external stresses that overcome the action of the spring 68, an one-piece unit capable of idly tilting around the axis of the bushing 50, coinciding with the axis of the capstan 24 and the flywheel 56.

A shaft 72 is fitted into a flanged bushing integral with the plate 62 and around it a gear wheel 74 idly rotates. When the plate 62 is in its rest position, above described, in contact with the ring 66, the gear wheel 74 meshes with the pinion 58 integral with the flywheel 56 and thus is apt to be driven by the pinion 58 in both the rotational directions.

On the shaft 72 there are threaded, starting from the plate 62, in order: an arm 76, which rests on the flanged bushing on which the shaft 72 is fitted, which acts as a fulcrum for it; a washer 78; a tab 80, idle around the shaft 72; a felt 82; the gear wheel 74; a Belleville star spring 84; and finally a thrust washer 86.

In this way, the spring 84 provides an axial load between the gear wheel 74 and tab 80 through the felt 82. The tab 80 can move only inside two positions defined by two stops 88, 90 which depend, as viewed in figure 11, downwards from the plate 62. Therefore, the gear wheel 74 rotationally drives the tab 80 by friction through the felt 82, till the related stop, making tab 80 to take on one of the two positions already stated, according to the rotational direction of the gear wheel 74.

The arm 76 carries a dowel 92, around which a satellite gear 94 idly rotates, which always meshes with the gear wheel 74. The dowel 92 extends beyond the plate 62 passing through a slot 96 of the plate 62 itself and is urged by a tension spring 98 to take on a rest position, resting against the left end, as viewed in figure 11, of the slot 96.

The slot 96 is shaped as a sector of a circle having as its center the axis of the shaft 72. The shaft 72 of the plate 62 extends beyond the frame 44 through an opening 100 of the frame itself and a washer 102 (figure 4) provides for keeping the plate 62 tight to the frame 44. In such a manner, the movement of the plate 62 with respect to the frame 44 remains constrained by the fact that the fork-like appendix 64 embraces the ring 66 and the shaft 72 moves inside the opening 100.

The plate 62' is symmetrical with respect to the plate 62 and all the component parts, related to it, shown in the drawings by the same reference numbers, as the component parts related to the plate 62, followed by an apex, are symmetric with respect to the corresponding component parts of the plate 62.

As better shown in figure 3, a slide 104 is located in contact with the frame 44 on the opposite side with respect to the flywheel 56 and it is free to travel right hand and left hand, as viewed in figure 3, starting from its central position, also shown in figure 3. For this purpose, it is guided by pins 106, 108, integral with the frame 44, which move in slots 110, 112, respectively, performed in the slide 104. A suitable spring, not shown, causes the slide 104 to go back to its central position each time it is left free to move. The slide 104 is provided with two windows 114, 114', into which the shafts 72, 72' respectively extend and the edges of such windows serve to control the movements of the plates 62 and 62', as it will be better described later on.

As better shown in figure 12, two shafts 116, 116' are integral with the frame 44 and around them two usual friction units idly rotate, which provide for taking up the magnetic tape around the reels of the microcassette. Two main gear wheels 118, 118', designed to be driven by the flywheel 56 in the manner which will be better described later on, drag by friction two secondary wheels 120, 120' through the friction action carried out by a felt disk 122, 122', respectively, inserted between them, under the action of springs 124, 124', respectively. The secondary wheels 120, 120' are rotationally, but not axially linked to hollow shafts 126, 126' on which two hub couplings 128 and 128', respectively, are fitted, designed to engage the reels of the microcassette 10. The hub couplings 128, 128' also have the function of load terminators for the springs 124, 124', the load of which thus is not transmitted to the shafts 116, 116'.

Two pairs of pins 130, 130' and 132, 132', respectively, are integral with the frame 44 and depend from it downwards as viewed in figure 4, that is they leave the frame 44 on the side facing the flywheel 56.

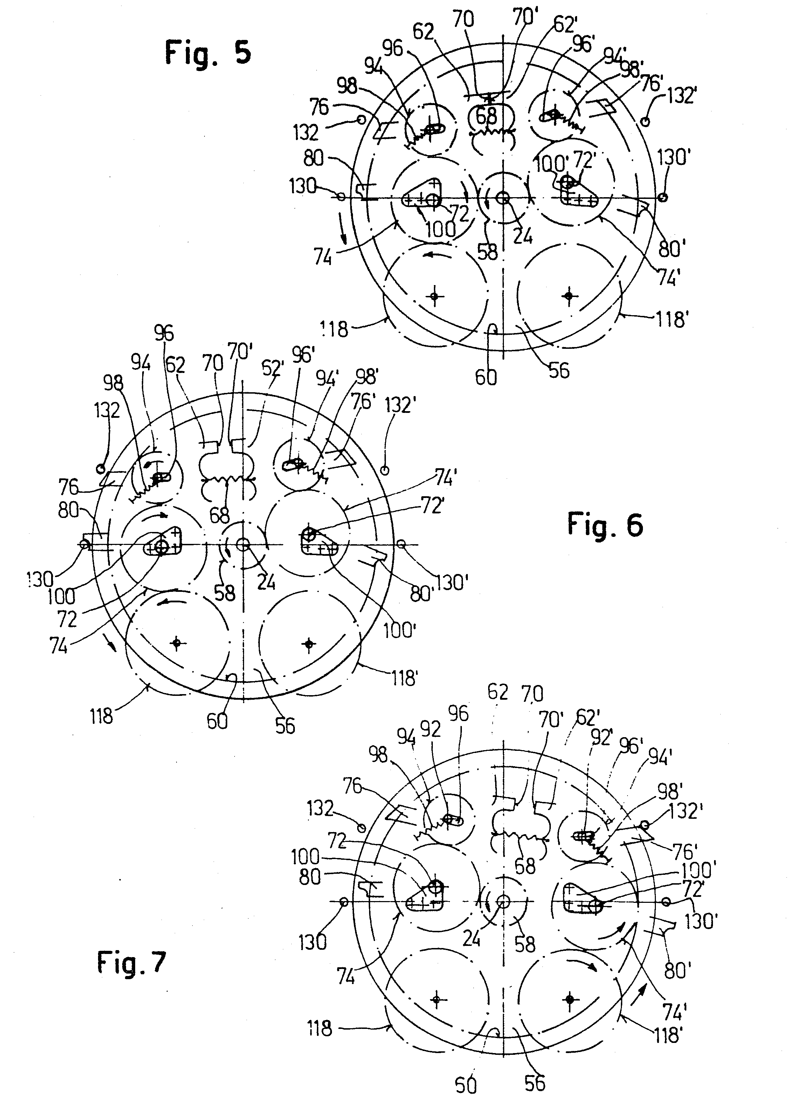

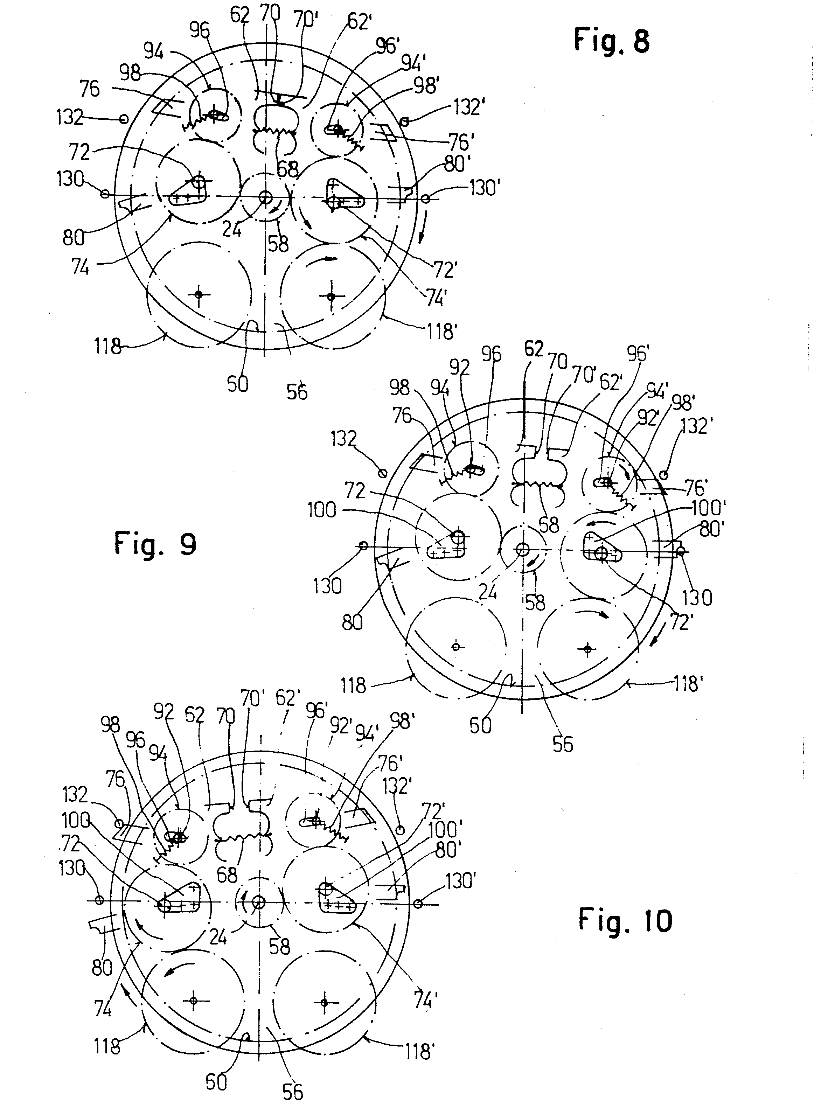

The operation of the device according to the present invention will be now described with reference mainly to the figures 5 to 10, and first starting with the normal speed operation for playing the tape first from right to left, with reference to figure 5, and subsequently from left to right, with reference to figure 8.

During the tape playing operation from right to left, the various elements, which are comprised in the device of the present invention, locate themselves as shown in figure 5. The slide 104 is in its central position under the action of its return spring and it is neither in contact with the shaft 72 nor the shaft 72', so that the plates 62 and 62' are in contact with each other at their edges 70 and 70' and both contact the ring 66 under the action of the spring 68, which tends to keep them joint together. Therefore, during the tape playing operation, the plates 62 and 62' form an one-piece tilting unit, capable of rotating as a whole around the axis of the bushing 50, which coincides with the axis of the flywheel 56, disregarding the play.

The carriage 36 is brought near the microcassette 10 by the stress of its springs 42 and therefore the pressure roller 22 is urged against the capstan 24 and the magnetic heads 26, 28 are brought into contact with the magnetic tape 40. The motor 46 rotates counterclockwise as viewed in figures 3 and 5; therefore also the flywheel 56 and the capstan 24 rotate counterclockwise and thus the tape 40 is dragged between the capstan 24 and pressure roller 22 and this causes it to pass at a constant speed from right to left on the head 28, enabled to read the magnetic tape. The gear wheels 74 and 74' mesh with the pinion 58 of the flywheel 56 and this engagement produces kinetic reactions which tend to rotate counterclockwise the whole unit comprising the plates 62 and 62' and their related component parts, around the axis of the bushing 50 and capstan 24, until the gear wheel 74 comes into engagement with the main wheel 118 of the left hand friction unit, causing the magnetic tape 40, dragged by the capstan 24, to be taken-up by the left hand reel of the microcassette 10.

At the same time, the gear wheel 74', whose shaft has been dragged counterclockwise, is disengaged from the main reel 118' of the right hand friction unit, which is thus free to feed the magnetic tape 40 to the capstan 24. Once the meshing between the wheels 74 and 118 has happened, the power transferred between them tends to confirm this meshing, therefore causing the gear wheel 118 to rotate at a speed which is related to that of the flywheel 56 in the ratio between the diameter of the pinion 58 and that of the main wheel 118. Thus the magnetic tape is wound on the left reel with the stress caused by the torque which can be transferred by means of the friction clutch assembled on the shaft 116 and already described.

The tabs 80 and 80' locate themselves into their respective positions as shown in figure 5, dragged by the gear wheels 74 and 74', through the action of the friction felts located on the shafts 72 and 72', respectively. The springs 98 and 98' keep the dowels 92 and 92' at their rest positions, resting against the ends of the slots 96 and 96', respectively.

In order to achieve the tape playing operation in the opposite direction, namely from left to right, it now suffices to reverse the rotation direction of the motor 46. This reversal command can be obviously generated by a usual device operative on the exausting of the tape in the feed reel, e. g. by detecting the stopping of one of the reels or one of the hub couplings 128, 128' or the related hollow shafts 126, 126' constrained to rotate with them.

Furthermore, this command can be provided by the user of the recorder, by hand, through a proper push-button during the reading of the tape.

The reversal of the rotational direction of the motor 46, that is after all its clockwise rotation as viewed in figure 8, causes the various elements, which are comprised in the device of the present invention, to locate themselves just as shown in this last cited figure.

Therefore the capstan 24, which also rotates clockwise, drags the tape from left to right, under the push of the pressure roller 22, which keeps contacting the capstan 24 through the tape 40, causing it to pass at a constant speed in front of the magnetic head 26, to which the reading has been switched upon the reversal of the rotational direction of the motor 46. Obviously, the two magnetic heads 26 and 28 are offset with respect to each other and therefore read different pairs of tracks on the magnetic tape 40. In this way, the switching from one head to the other one consequently causes a switching from one pair of tracks to the other one.

The pinion 58 of the flywheel 56 now exercises on the wheels 74 and 74', meshing with it, forces which cause a clockwise torque on the whole unit comprising the two plates 62 and 62' and the elements related to them, disengaging the gear wheel 74 from the main wheel 118 and carrying the gear wheel 74 to mesh with the main wheel 118' of the right hand friction unit. Once the meshing between the wheel 74' and 118' has happened, the power transferred between them tends to confirm this meshing, therefore causing the gear wheel 118' to rotate at a speed which is related to that of the flywheel 56 in the ratio between the diameter of the pinion 58 and that of the main wheel 118'. Thus the magnetic tape is wound on the right hand reel with the stress caused by the torque which can be transferred by means of the friction clutch assembled on the shaft 116' and already described.

Therefore a condition exactly symmetrical with respect to the previous one is experienced: also the tabs 80 and 80' change their position, locating themselves as shown in figure 8.

It should be noted that, as described, during the normal speed movement of the tape, that is for instance during the tape reading operation, the plates 62 and 62' always keep contacting each other at their edges 70 and 70' in both the directions of the tape movement as well as during the time the reversal of the tape motion is being done. Therefore, in the case in which one would wish to limit the device only to the normal speed movement of the magnetic tape in both the directions, the plates 62 and 62' can be carried out in a single piece, tilting around the bushing 50, and the various elements already described, which however do not take part in the transfer of the motion during the normal speed operation, can be likewise omitted. In this case only one precaution is needed: providing anyway some friction reaction between the plates 62 and 62' and the gear wheels 74 and 74', respectively, or in any case proper actions and reactions for securing that the tilting of the single one-piece unit, comprising the plates 62 and 62' integral with each other, around the bushing 50, surely occurs and allows torques to be transferred through them.

Let us consider now the case of the fast search of a passage, made possible with the embodiment of the device of the present invention, previously described with reference to the accompanying drawings.

First of all, it should be noted that the fast displacement movements of the magnetic tape 40 take place under the control of the slide 104, when it is moved away from its central rest position, to which it is urged by its return spring (not shown) both to the right or the left as viewed in figure 3, whereby it acts on the plates 62 and/or 62' overcoming the action of the spring 68, which tends to keep the two plates 62 and 62' in contact with each other and against the ring 66.

Let us suppose that a playing is happening, that is a normal speed movement, in the direction in which the tape is read during its movement from right to left as viewed in figure 5. Therefore the embodiment and the position of the kinematic elements of the present device will be as shown in the cited figure 5, as already mentioned. If, starting from these conditions, it is desired to skip the play of a passage recorded on the tape, a fast forward transfer of the tape, winding it onto the left hand reel, is needed. Therefore, in order to achieve a fast forward transfer to the left, while the motor 46 rotates counterclockwise, the slide 104 (figure 3) is shifted to the left as viewed in figure 3, against the action of its spring which tends to return it into its central rest position shown in figure 3. The shifting of the slide 104 causes in the first place the pressure roller 22 to leave the capstan 24, as better shown in a schematic way in figure 2; furthermore, the innermost edge of the window 114, that is the one closest to the capstan 24, shifts to the left the shaft 72, which drags the plate 62 in its movement, against the action of the spring 68.

Since, as shown in figure 5, the tab 80 is raised, it goes to touch the pin 130, integral with the frame 44. Thus the device of the present invention locates itself as shown in figure 6: the plate 62 and all the component parts connected to it, are in a well determined position, in which the tab 80 rests on the pin 130 of the frame 44 and on the limit stop 88 of the plate 62, whereas the fork-like appendix 64 is always constrained to surround the ring 66. In this position, the gear wheel 74 has been disengaged from the pinion 58 of the flywheel 56, but it is always meshing with the main wheel 118 of the right hand friction unit, whereas the satellite gear 94, by itself always meshing with the gear wheel 74, goes meshing with the internal gear 60 of the  flywheel 56. It is here to be noted that, due to the contact of the tab 80 against the pin 130, the gear wheel 74 does not arrive to touch the internal gear 60 and the satellite gear 94 is correctly positioned with respect to the internal gear 60 due to the fact that its dowel 92 is kept to rest against the edge of the slot 96 by the spring 98, which therefore cannot force the satellite gear 94 against the internal gear 60.

In the meanwhile, the plate 62' has not changed its position and the further load caused by the extension of the spring 68 serves to keep the fork-like appendix 64' firmly in contact with the ring 66 and to confirm the disengagement of the gear wheel 74' from the main wheel 118'.

In the situation above described and shown in figure 6, the flywheel 56 transmits, through the gears 94 and 74, a counterclockwise rotation to the main wheel 118, with a speed that is in relation to that of the flywheel in the ratio between the pitch diameter of the internal gear 60 and that of the main wheel 118, and therefore this is a speed decidedly greater than the speed of the normal movement, which is achieved during the tape playing. In this way, one can achieve a fast forward transfer of the tape in the direction of movement and reading from right to left: in a practical embodiment the fast motion angular speed of the main wheel 118 has been about six times greater than the normal motion angular speed.

When the slide 104 is left free to return into its rest central position under the action of its return spring, the plate 62 is brought again into contact with the ring 66 and the plate 62' by the action of the spring 68, whereas the pressure roller 22 is returned back in contact with the capstan 24 by the action of the springs 42, acting on the carriage 36. Therefore, the gear wheel 74 is moved again into engagement with the pinion 58 and the satellite gear 94 is taken away from the internal gear 60.

The tape reading is thus resumed, all the elements of the present device being again positioned as shown in figure 5, and therefore in the same direction of movement as it had before the fast forward command.

Now, let us suppose we wish to listen again to a passage already played, the playing direction being always from right to left as shown in figure 5. In order to achieve this, the tape has to be fast rewound onto the right hand reel of the microcassette.

During the normal speed reading from right to left, as shown in figure 5, the plate 62' takes such a position that the gear wheel 74' is disengaged from the main wheel 118'. The tab 80' is dragged into its lowered position shown in figure 5 by the action of the friction clutch which is located on the shaft 72', which action pushes the tab 80' to rest against the stop 90' (see figure 11).

If, starting from the arrangement shown in figure 5, the slide 104 is moved to the right as viewed in figure 3, first the removal of the pressure roller 22 away from the capstan 24 takes place, as better shown in a schematic way in figure 2; furthermore, the innermost edge of the window 114', that is the one closest to the capstan 24, shifts the shaft 72' to the right, which drags the plate 62' in its movement, against the action of the spring 68. Due to the form of the opening 100' of the frame, the gear wheel 74' is drawn nearer to the main wheel 118' and, since the tab 80' is lowered, as already stated, and thus does not meet the related pin 130' in this case, in the end the gear wheel 74' reaches the position shown in figure 7, in which position it meshes, on one side, with the main wheel 118' and, on the other side, with the internal gear 60.

During this travel, the arm 76' contacts the pin 132' of the frame 44, causing the dowel 92' to move in the slot 96' of the plate 62', against the action of the spring 98'. In such a way, the satellite gear 94' is prevented from entering into engagement with the internal gear 60 of the flywheel 56.

Thus, the flywheel, through the gear wheel 74', causes the main wheel 118' to rotate in the rotation direction opposite to that of the flywheel itself. The ratio between the angular speed of the flywheel 56 and the angular speed of the main wheel 118' equals the ratio between the pitch diameter of the internal gear 60 and that of the main wheel 118', whereby a tape rewinding speed much greater than the normal playing movement speed, and substantially equal to the fast forward one, is achieved.

As far as the plate 62 is concerned, it gets the position shown in figure 7, under the action of the spring 68, which tends to draw the edges 70, 70' of the plates 62, 62' near to each other and therefore to cause the fork-like appendix 64 to rotate around the ring 66, until the shaft 72 goes into the position shown in figure 7, inside the opening 100 of the frame 44. In this way, the disengagement of the gear wheel 74 from the related main wheel 118 is correctly secured.

In the previously described way, a tape fast rewinding operation is therefore achieved, in the case the magnetic tape is being played from right to left .

When the slide 104 becomes free, it is caused to return into its central rest position by its own spring (not shown), while the plate 62' is drawn by the spring 68 towards the plate 62, and this causes the gear wheel 74' to disengage from the internal gear 60 and engage the pinion 58. In the meanwhile, due to the contour of the opening 100', the unit, comprising the two plates 62, 62' which are approaching each other, is caused to rotate counterclockwise by the meshing of the pinion 58 with the gear wheel 74, until the gear wheel 74 has been carried into engagement with the main wheel 118. Therefore, the conditions shown in figure 5 are found and the reading of the tape is resumed, in the direction previous to the fast rewinding command.

Let us suppose now to be in a situation of normal speed movement for reading the tape from left to right, that is in which the motor rotates clockwise, an operation already described above, with reference to the figure 8.

Let us take now into consideration the behaviour of the present device in the case of the fast forward transfer and fast rewinding operation, starting from this latter direction of the tape movement.

In this case, when the slide 104 is moved towards the right starting from its central rest position, the situation shown in figure 9 is reached, in which a fast forward transfer of the magnetic tape is achieved, symmetrically to what has already been described in the case of the counterclockwise rotation of the motor, with reference to the figure 6.

Therefore, by moving the slide 104 right hand, the pressure roller 22 is first caused to move away from the capstan 24, as better shown in a schematic way in figure 2; furthermore, the innermost edge of the window 114' moves the shaft 72' to the right, which drags in its movement the plate 62' against the action of the spring 68. The tab 80' being raised, it goes to contact the pin 130', integral with the frame 44, and this prevents the gear wheel 74', disengaged from the pinion 58, but always meshing with the main wheel 118', to reach till engaging the internal gear 60. The satellite gear 94', which in turn always remains meshing with the gear wheel 74', on the contrary goes meshing with the internal gear 60. Furthermore, the position of the plate 62 is confirmed. Therefore a fast clockwise rotation is imparted to the right hand friction unit, which causes a fast forward tape transfer from left to right, that is in the same direction as the tape playing, which was happening before the slide 104 had been moved. Obviously, also in this case, the return of the slide 104 back into its central position, involves the return to the normal speed movement, and therefore to the reading of the magnetic tape in the direction of motion carried out before the fast forward operation, i. e. from left to right in this case.

At the end, let us take into consideration the case of fast rewinding operation when the motor rotates clockwise, during which operation the present device takes the kinematic configuration shown in figure 10, in a symmetrical way with respect to what has been already described in the case of a counterclockwise rotation of the motor, with reference to the figure 7.

In case of a clockwise rotation of the motor 46, by moving the slide 104 to the left, one causes, as usual, first the pressure roller 22 to leave the capstan 24, as better shown in a schematic way in figure 2; furthermore, the innermost edge of the window 114 shifts towards the left the shaft 72, which drags the plate 62 into movement against the action of the spring 68.

The tab 80 being now lowered, as it is better seen from figure 8, it does not go to contact the related pin 130, but the gear wheel 74 goes meshing with the internal gear 60, at the same time reaching the meshing with the main wheel 118 of the left hand friction unit and disengaging from the pinion 58. The satellite gear 94, always meshing with the gear wheel 74, cannot, however, reach the engagement with the internal gear 60, since the arm 76 rests against the pin 132 and therefore the dowel 92 travels in the slot 96 against the action of the spring 98.

Furthermore, the plate 62', under the action of the spring 68, rotates around the ring 66, causing the gear wheel 74' to become free from the engagement with the main wheel 118'.

In this way, a fast rewinding movement is given to the tape 40, and this movement is terminated by leaving the slide 104 free to take up its central position again, whereby the device resumes by itself the normal speed movement from left to right.

It should be noted that the slide 104, when it is shifted away from its central position, both to the right or the left, reaches different positions, depending on the rotational direction of the motor 46, due to the different end positions allowed the shafts 72 and 72'. Therefore, it is suitable that the moviment of the slide 104 is carried out through the interposition of a resilient element, which avoids excessive loads on the shafts 72 and 72'.

In an execution variation, means are provided for engaging the satellite gears 94 and 94' with the internal gear 60, and disengaging them from the related gear wheel 74 or 74' during the fast search movements. Besides, both the operation and the arrangement of the various elements remain the same, except for the execution of obvious variations in the arms 76 and 76' and slots 96 and 96'.

In another embodiment of the device according to the present invention, the shafts 72 and 72' of the plates 62 and 62' only carry, in the following order: the felts 82 and 82', the gear wheels 74 and 74', the star springs 84 and 84', as well as the thrust washers 86 and 86', respectively. Furthermore, the pins 130, 130' and 132, 132' of the frame 44 are omitted.

In this way, the actuation of the slide 104 always carries one of the two wheels 74, 74' meshing with the internal gear 60 and with the related main wheel 118, 118', securing the contemporaneous disengagement between the other gear wheel 74', 74 and the related main wheel 118', 118, according to the movement direction of the slide 104 and independently from the rotational direction of the motor 46 and hence of the flywheel 56.

This could cause the tape to unwing out of the reel which, driven by the flywheel, might act as take-up reel, for instance as it would happen if, starting from a configuration of the device operating at a normal speed with the flywheel rotating counterclockwise, the slide 104 is shifted towards the left, with reference to figure 5. In fact, in this case, the main wheel 118 would be forced to rotate at high speed clockwise, and this would cause the tape to be unwound from, rather than wound into the related reel of the microcassette 10.

In order to avoid this, a proper control for the motion direction of the motor secures that, while the slide is being moved away from its central position, a check of the rotation direction of the motor 46 and hence of the flywheel 56 is carried out, and, in the case it has been detected that the motor is rotating in the wrong direction, provides for a reversal of the motion direction of the motor 46. In this way, the shifting of the slide 104 always causes the tape to fast wind onto that reel, towards which the slide 104 itself is shifted.

Although only some preferred embodiments of the present invention have been herein described and shown in detail, it is obvious that other numerous and different changes and modifications can be performed on them by the skilled in the art, without departing from the scope of the present invention. It is intended therefore that all these changes and modifications are encompassed in the field of this invention.

CLAIMS

1. A tape transport device for moving a magnetic tape in both the directions of motion, particularly for microcassette decks, in which a capstan (24) rotating in both the rotation directions is fitted to a flywheel (56) and drags at a constant speed alternately in one of the two movement directions the magnetic tape (40) enclosed in the microcassette (10) whereas one of two friction units, according to the movement direction, provides for the rotation of the related reel acting as a tape take-up reel inside the microcassette, which device is characterized in that it comprises a tilting unit (62, 62'), tiltable around the axis of said capstan (24) and provided with two shafts (72, 72') around which two gear wheels (74, 74') rotate, meshing with a pinion (58) integral with said flywheel (56), whereby the flywheel tends to drag into rotation, in its same direction, said tilting unit (62, 62'), until it carries one of the two gear wheels (74, 74') to mesh with the main wheel (118, 118') of the related friction unit, the arrangement being such that, upon the reversal of the direction of rotation of the flywheel, the tilting unit tilts rotating around the capstan axis and positions itself in such a manner that the other of the two gear wheels (74', 74) goes meshing with the main wheel (118', 118) of the related friction unit, thus causing the two tape reels to alternate in the function of take-up reel.

2. A device according to claim 1, characterized in that said tilting unit is assembled around a ring (66) rotatable as a bearing around the bushing (50) in which the capstan (24) is guided.

3. A device according to claim 1 or 2, characterized in that friction elements are provided, located in the kinematic path between the flywheel (56) and the tilting unit (62, 62'), for securing the tilting of it and the transferability of substantial forces between the pinion (58) and the main wheel (118, 118') related to the reel acting as a tape take-up reel.

4. A device according to claim 3, characterized in that said friction elements comprise two felts (82, 82'), each located between one of the gear wheels (74, 74') and the foot of the related shaft (72, 72') of the tilting unit (62, 62').

5. A device according to any one of the preceding claims, characterized in that the flywheel (56) carries an internal gear (60), located along its outer edge, and the tilting unit comprises two plates (62, 62'), each carrying one of the two shafts (72, 72') and movable away from the capstan (24) separately with respect to the other plate, until it disengages the gear wheel (74, 74'), carried by it, from the engagement with said pinion (58) and moves it into a contemporaneous meshing engagement with the internal gear (60) and the main wheel (118, 118') of the related friction unit, means being provided for securing that the other of the two plates (62', 62) has anyway already tilted around the axis of the capstan (24), so as to have disengaged the gear wheel (74', 74)

carried by it, from the meshing engagement with the main wheel (118', 118) of the related friction unit, before said contemporaneous meshing engagement has happened.

6. A device according to claim 5, characterized in that a spring means is provided for keeping said plates (62, 62') in contact with each other.

7. A device according to claim 5 or 6, characterized in that a ring (66) is rotatable as a bearing around the bushing (50) in which the capstan (24) is guided and each plate (62, 62') has a fork-like appendix (64, 64') surrounding said ring (66).

8. A device according to claim 7, characterized in that a tension spring (68) is provided for keeping the two plates (62, 62') in contact with the ring (66) and leaning on each other at suitable cooperating edges (70, 70').

9. A device according to any one of the claims 5 to 8, characterized in that each of said plates (62, 62') further carries a satellite gear (94, 94') and a discriminating member operative upon the rotation direction of the related gear wheel (74, 74') to limit the displacement towards the internal gear (60) of the only gear wheel (74, 74') related to the friction unit of the reel having, in that direction of the tape movement, the function of take-up reel, whereby the gear wheel (74, 74') always meshes with the main wheel (118, 118') of the friction unit of the take-up reel, but does not directly mesh with the internal gear (60), being driven by it through its satellite gear (94, 94').

10. A device according to claim 9, characterized in that each discriminating member comprises a tab (80, 80') idle around its related shaft (72, 72') and movable between two positions, bound by related stops (88, 88' and 90, 90'), under the dragging action of said gear wheel (74, 74') through a felt (82, 82'), according to the rotational direction of the flywheel and hence of the wheel itself, a pin (130, 130') being located on the frame (44) so as to interfere with the path of said tab (80, 80'), when the tape movement direction is such that the reel, related to the gear wheel (74, 74') which is being moved towards the internal gear (60), is acting as a take-up reel.

11. A device according to claim 9 or 10, characterized in that each satellite gear (94, 94') is carried by an arm movable with respect to the related plate (62, 62') in order to avoid that, when the related gear wheel (74, 74') directly meshes with the internal gear (60), an interference occurs by the satellite gear (94, 94').

12. A device according to claim 11, characterized in that each satellite gear (94, 94') is carried on a dowel (92, 92') of an arm (76, 76'), movable around the shaft (72, 72') of the related plate (62, 62'), said arm (76, 76') being rotated in the direction that moves the satellite gear (94, 94') away from the internal gear (60) when the gear wheel (74, 74'), related to it, is being carried to directly mesh with the internal gear (60).

13. A device according to claim 12, characterized in that each of said arms (76, 76') is shaped so that it interferes with a further pin (132, 132') when the satellite gear (94, 94'), carried by it, must be kept far from the internal gear (60).

14. A device according to claim 13, characterized in that the motion of the arm (76, 76') is limited by the fact that the dowel (92, 92') moves in a slot (96, 96') of the related plate (62, 62'), a spring (98, 98') being provided for urging said satellite gear (94, 94') towards the meshing with said internal gear (60).

15. A device according to any one of the preceding claims, characterized in that the frame (44) has two openings (100, 100') inside which the shafts (72, 72') move and which thus limit the displacements of the plates (62, 62').

16. A device according to any one of the claims 5 to 15, characterized in that a slide (104) is provided, reciprocable with respect to the frame and operable to shift one of the two plates (62, 62') separately from the other one.

17. A device according to claim 16, characterized in that said slide (104) is provided with two windows (114, 114'), inside each of which is located the related shaft (72, 72') of each plate.

Fig. 2

Fig. 11

Fig. 1

− 1/4 −

0116263

0116263

## Fig. 4

## Fig. 12

## Fig.13

## Fig.3

0116263

Fig. 5

Fig. 6

Fig. 7

0116263

Fig. 8

Fig. 9

Fig. 10